# EUROPEAN PATENT APPLICATION

(11) **EP 4 207 342 A1**
(43) Date of publication of application: **05.07.2023**
(21) Application number: 20962932.8
(22) Date of filing: 27.11.2020
(51) Int. Cl.: H01M 4/13

(54) **ELECTROCHEMICAL APPARATUS AND ELECTRONIC APPARATUS**

(71) Applicant: Dongguan Amperex Technology Limited, Dongguan, Guangdong 523000 (CN)
(72) Inventor: LIU, Xiaoqian, Dongguan, Guangdong 523000 (CN)
(74) Representative: Klunker IP Patentanwälte PartG mbB
(86) International application number: PCT/CN2020/132350
(87) International publication number: WO 2022/110042

(57) **Abstract**

This application provides an electrochemical apparatus and an electronic apparatus. The electrochemical apparatus includes a positive electrode. The positive electrode includes a current collector. The current collector includes a coated region provided with an active material, and an uncoated region provided with no active material, where the uncoated region is at least partially provided with an insulation layer, and the insulation layer includes a binder and inorganic particles. Based on a total mass of the insulation layer, a mass percentage of element aluminum in the insulation layer is 20% to 52%. An adhesion F between the insulation layer and the current collector is not less than 201 N/m. In the electrochemical apparatus in this application, the safety of the electrochemical apparatus is improved due to sufficient adhesion between the insulation layer and the current collector of the positive electrode.

## Description

### TECHNICAL FIELD

This application relates to the field of electrochemical technologies, and specifically, to an electrochemical apparatus and an electronic apparatus.

### BACKGROUND

Lithium-ion batteries have been widely used in various fields such as electrical energy storage, portable electronic devices, and electric vehicles, due to their characteristics such as high specific energy, high working voltage, low self-discharge rate, small size, and light weight.

A lithium-ion battery typically includes a positive electrode, a negative electrode, and a separator, where the separator is sandwiched between the positive electrode and the negative electrode. The positive electrode typically includes a current collector, an active material layer, and an insulation layer, where the insulation layer is typically disposed in a region provided with no active material layer on a surface of the current collector, so as to improve the overall insulation performance of the positive electrode. According to the inventor's research, in the existing lithium-ion batteries, adhesion between the insulation layer and the current collector still needs to be enhanced due to the influence of the material composition of the insulating layer.

### SUMMARY

This application is intended to provide an electrochemical apparatus and an electronic apparatus, so as to enhance adhesion between an insulation layer and a current collector.

It should be noted that in the following description, an example in which a lithium-ion battery is used as an electrochemical apparatus is used to describe this application. However, the electrochemical apparatus in this application is not limited to the lithium-ion battery.

Specific technical solutions are as follows:
A first aspect of this application provides an electrochemical apparatus. The electrochemical apparatus includes a positive electrode. The positive electrode includes a current collector. The current collector includes a coated region provided with an active material, and an uncoated region provided with no active material, where the uncoated region is at least partially provided with an insulation layer, and the insulation layer includes a binder and inorganic particles. Based on a total mass of the insulation layer, a mass percentage of element aluminum in the insulation layer is 20% to 52%, preferably 30% to 50.3%. An adhesion F between the insulation layer and the current collector is not less than 201 N/m.

In the electrochemical apparatus in this application, a region provided with an active material on a surface of the current collector of the positive electrode may be referred to as a coated region; and a region provided with no active material on a surface of the current collector is referred to as an uncoated region. The uncoated region may be at least partially provided with an insulation layer, and different arrangement manners may be used, for example, including but not limited to: providing the insulation layer on two sides of the positive electrode in a length direction, providing the insulation layer on a starting end side of the positive electrode, or providing the insulation layer on a terminating end side of the positive electrode. The foregoing arrangement manners may be used alone, or used in combination. The starting end and the terminating end may refer to a starting end and a terminating end of a winding structure in a lithium-ion battery with the winding structure.

In this application, based on the total mass of the insulation layer, the mass percentage of the element aluminum in the insulation layer is 20% to 52%, preferably 30% to 50.3%, so that strength of the insulation layer can be enhanced, and the adhesion between the insulation layer and the current collector can be enhanced. The adhesion F between the insulation layer and the current collector is not less than 201 N/m, preferably not less than 300 N/m, indicating that the insulation layer has excellent adhesion performance.

In an embodiment of this application, the binder may include at least one of polypropylene, polyacrylate, acrylonitrile multipolymer, or salt carboxymethyl cellulose. The addition of the binder can improve viscosity of the insulation layer, thereby enhancing the adhesion between the insulation layer and the current collector.

In an embodiment of this application, the binder may include a polymer formed by polymerization of at least one of a monomer of acrylonitrile, acrylate, acrylamide, or acrylic ester. Preferably, the binder may include a polymer formed by polymerization of at least one of a monomer of acrylonitrile, acrylate, or acrylamide.

The binder in this application may be an aqueous binder. Metal ions in acrylate can replace some hydrogen ions, improving hydrophilicity of the binder and alleviating swelling of the binder in an electrolyte, while maintaining relatively high adhesion. In addition, reducing the hydrogen ions prevents the swelling of the lithium-ion battery caused by excessive hydrogen ions, as hydrogen ions can easily acquire electrons to form hydrogen.

In an embodiment of this application, based on a total mass of the polymer, a mass percentage of acrylonitrile is 25% to 70%, a mass percentage of acrylate is 10% to 60%, a mass percentage of acrylamide is 10% to 60%, and a mass percentage of acrylic ester is 0% to 10%. Without being limited to any theory, by controlling the mass percentages of the acrylonitrile, the acrylate, the acrylamide, and the acrylic ester within the foregoing range, a binder with good adhesion performance can be obtained, thereby enhancing the adhesion between the insulation layer and the current collector.

In an embodiment of this application, the binder has a weight-average molecular weight of 100000 to 2000000, preferably 300000 to 800000. Without being limited to any theory, when the binder has an excessively large weight-average molecular weight, its thickening effect is enhanced, resulting in excessively large viscosity and poor fluidity of a slurry, which may lead to incomplete coating of the insulation layer slurry. When the binder has an excessively small weight-average molecular weight, viscosity of a slurry is excessively low, and a film forming property of the slurry is poor, resulting in incomplete coating of the insulation layer slurry. Without being limited to any theory, by controlling the weight-average molecular weight of the binder within the foregoing range, the insulation layer slurry forms a film with a uniform thickness on a surface of a substrate of the current collector, forming the insulation layer, and enhancing the adhesion between the insulation layer and the current collector.

In an embodiment of this application, based on a total mass of the insulation layer, a mass percentage of the binder is 2% to 50%, and a mass percentage of the inorganic particles is 50% to 98%. Without being limited to any theory, when the percentage of the binder is excessively low, for example, lower than 2%, the insulation layer has a poor film forming property, which is not conducive to improving a cover rate. When the percentage of the binder is excessively high, for example, higher than 50%, the insulation layer slurry forms a continuous film during film forming, which may lead to large areas of the insulation layer detaching from a substrate of the current collector. The percentages of the binder and the inorganic particles being controlled within the foregoing range helps enhance the adhesion between the insulation layer and the current collector.

In an embodiment of this application, a cover rate of the insulation layer is not less than 90%. The cover rate of the insulation layer being controlled not less than 90% can make the positive electrode have better insulation performance.

In an embodiment of this application, the insulation layer has a thickness of 0.02 µm to 10 µm. Without being limited to any theory, when the thickness of the insulation layer is excessively low, for example, lower than 0.02 µm, strength of the insulation layer is excessively low, affecting the insulation performance. When the thickness of the insulation layer is excessively high, for example, higher than 10 µm, a relative percentage of an active material in the positive electrode is reduced, affecting energy density of the lithium-ion battery. By controlling the thickness of the insulation layer within the foregoing range, the insulation layer can have desired strength and insulation performance.

In an embodiment of this application, Dᵥ99 of the inorganic particles is 0.01 µm to 10 µm. The Dᵥ99 of the inorganic particles is preferably not greater than thickness of the insulation layer; otherwise the aluminum foil may be easily punctured during cold pressing, resulting in concave-convex points with a thickness greater than the target insulation layer. In this application, Dᵥ99 indicates a particle size of the inorganic particles that reaches 99% of a cumulative volume from a small particle size side in volume-based particle size distribution.

In an embodiment of this application, the inorganic particles include at least one of boehmite, diaspore, or aluminum oxide. The inclusion of the inorganic particles can improve the strength and insulation performance of the insulation layer.

Methods for preparing the binder in this application are not particularly limited. Any method commonly known to persons skilled in the art may be used, for example, the following preparation method may be used:
adding distilled water into a reactor, starting to stir, introducing nitrogen to remove oxygen, adding at least one of the foregoing compositions such as the acrylonitrile, the acrylate, the acrylamide, or the acrylic ester at different mass ratios, heating the resulting mixture in an inert atmosphere to 65°C and maintaining the temperature, subsequently adding an initiator to initiate a reaction, and ending the reaction after about 20 h.

In this application, the initiator is not particularly limited, provided that monomer polymerization can be initiated. For example, the initiator may be a 20% ammonium persulfate solution. In this application, amounts of the distilled water and the initiator added are not particularly limited, provided that an added monomer can undergo a polymerization reaction. After the reaction, an alkaline solution may be added to a precipitate formed in the reaction for neutralization, to make sure that a pH value is 6.5 to 9. Alternatively, reaction products may be filtered, washed, dried, crushed, sieved, or the like.

Persons skilled in the art should understand that the positive electrode in this application can be provided with an active material layer on one surface, or provided with active material layers on both two surfaces. The insulation layer in this application may be disposed on at least one surface of the positive electrode. For example, the insulation layer may be disposed on one surface of the positive electrode, or disposed on two surfaces of the positive electrode.

In the positive electrode in this application, the positive electrode current collector is not particularly limited, and may be any positive electrode current collector commonly known in the art, for example, an aluminum foil, an aluminum alloy foil, or a composite current collector. The positive electrode active material layer includes a positive electrode active material. The positive electrode active material is not particularly limited, and any positive electrode active material commonly known in the art may be used. For example, the positive electrode active material may include at least one of lithium nickel cobalt manganate (811, 622, 523, 111), lithium nickel cobalt aluminate, lithium iron phosphate, lithium-rich manganese-based material, lithium cobaltate, lithium manganate, lithium manganese iron phosphate, or lithium titanate.

A negative electrode in this application is not particularly limited, provided that the purpose of this application can be achieved. For example, the negative electrode typically includes a negative electrode current collector and a negative electrode active material layer. The negative electrode current collector is not particularly limited, and any negative electrode current collector commonly known in the art can be used, for example, a copper foil, an aluminum foil, an aluminum alloy foil, or a composite current collector. The negative electrode active material layer includes a negative electrode active material. The negative electrode active material is not particularly limited, and any negative electrode active material commonly known in the art can be used. For example, the negative electrode active material may include at least one of artificial graphite, natural graphite, mesocarbon microbeads, soft carbon, hard carbon, silicon, silicon carbon, lithium titanate, or the like.

The lithium-ion battery in this application further includes an electrolyte. The electrolyte may be one or more selected from a group consisting of a gel electrolyte, a solid electrolyte, and a liquid electrolyte. The liquid electrolyte includes a lithium salt and a non-aqueous solvent.

In some embodiments of this application, the lithium salt is one or more selected from a group consisting of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, LiPF₆ may be selected as the lithium salt because it can provide high ionic conductivity and improve the cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An instance of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An instance of the cyclic carbonate compound is ethylene carbonate (EC), propylene carbonate (PC), butylene carbonate (BC), vinyl ethylene carbonate (VEC), or a combination thereof. An instance of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An instance of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof.

An instance of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An instance of the another organic solvent is dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, or a combination thereof.

A second aspect of this application provides an electronic apparatus including the electrochemical apparatus according to the first aspect of this application.

The electronic apparatus in this application is not particularly limited, and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

A process for manufacturing the electrochemical apparatus is well known to persons skilled in the art, and is not particularly limited in this application. For example, the electrochemical apparatus may be manufactured in the following process: a positive electrode and a negative electrode are stacked with a separator, and are put into a housing after operations such as winding and folding as required. A liquid electrolyte is injected into the housing and then the housing is sealed. The separator in use is the foregoing separator provided in this application. In addition, if necessary, an overcurrent prevention element, a guide plate, and the like may be placed in the housing to prevent pressure increase, overcharge, and overdischarge in the electrochemical apparatus.

This application provides an electrochemical apparatus and an electronic apparatus. The electrochemical apparatus includes a positive electrode. The current collector includes a coated region provided with an active material, and an uncoated region provided with no active material, where the uncoated region is at least partially provided with an insulation layer, and the insulation layer includes a binder and inorganic particles. Based on a total mass of the insulation layer, a mass percentage of element aluminum in the insulation layer is 20% to 52%. Adhesion F between the insulation layer and the current collector is not less than 201 N/m, ensuring sufficient adhesion between the insulation layer and the current collector and thus improving the safety of the electrochemical apparatus.

### BRIEF DESCRIPTION OF DRAWINGS

To describe the technical solutions in this application and the prior art more clearly, the following briefly describes the accompanying drawings required for describing the embodiments and the prior art. Apparently, the accompanying drawings in the following description show merely some embodiments of this application.
FIG. 1 is a schematic structural diagram of a positive electrode plate according to an embodiment of this application;
FIG. 2a is a schematic structural diagram of a positive electrode plate according to another embodiment of this application;
FIG. 2b is a schematic structural diagram of a positive electrode plate according to still another embodiment of this application;
FIG. 2c is a schematic structural diagram of a positive electrode plate according to still another embodiment of this application;
FIG. 3 is a schematic structural diagram of a positive electrode plate according to still another embodiment of this application; and
FIG. 4 is a schematic diagram showing a relationship between adhesion and a stroke in an adhesion test.

Reference signs: 1. active material layer; 2. insulation layer; and 3. current collector.

### DETAILED DESCRIPTION

To make the objectives, technical solutions, and advantages of this application more comprehensible, the following describes this application in detail with reference to accompanying drawings and embodiments. Apparently, the described embodiments are merely some rather than all of the embodiments of this application. All other technical solutions obtained by persons of ordinary skill in the art based on the embodiments of this application fall within the protection scope of this application.

It should be noted that, in the specific embodiments of this application, an example in which a lithium-ion battery is used as an electrochemical apparatus is used to explain this application. However, the electrochemical apparatus in this application is not limited to the lithium-ion battery.

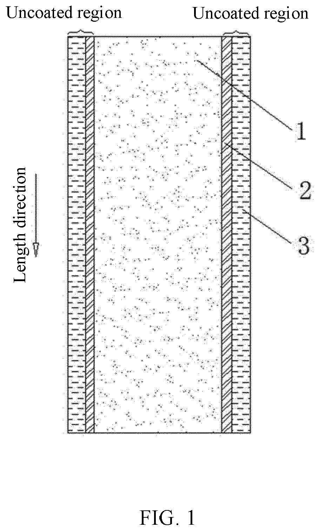

FIG. 1 is a schematic structural diagram (top view) of a positive electrode plate according to an embodiment of this application. The positive electrode plate is typically rectangular. As shown in FIG. 1, uncoated regions may be provided on two sides in a length direction of the positive electrode plate, that is, regions provided with no active material layer 1, where a current collector 3 is exposed from the uncoated region. In FIG. 1, insulation layers 2 may be disposed in the uncoated regions, specifically, may be disposed on two sides in a length direction of the positive electrode. Certainly, the insulation layer 2 may also be disposed on only one of the sides in the length direction of the positive electrode.

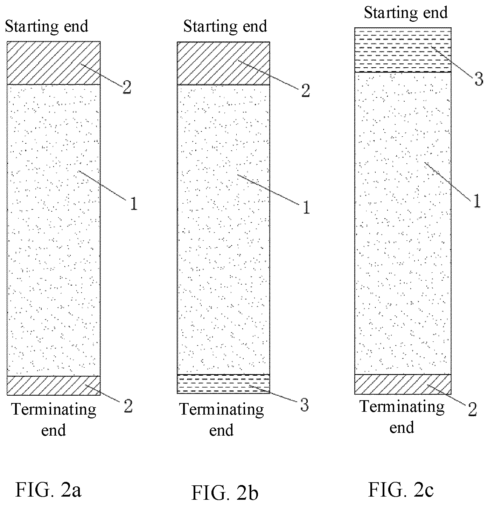

FIG. 2a to FIG. 2c are respectively schematic structural diagrams (top views) of positive electrode plates according to three other embodiments of this application. Uncoated regions may also be provided at a starting end and a terminating end of the positive electrode plate. Therefore, as shown in FIG. 2a, a starting end side and a terminating end side of the positive electrode plate may be both provided with an insulation layer 2. Alternatively, as shown in FIG. 2b or FIG. 2c, only one of the starting end side and the terminating end side of the positive electrode is provided with the insulation layer 2.

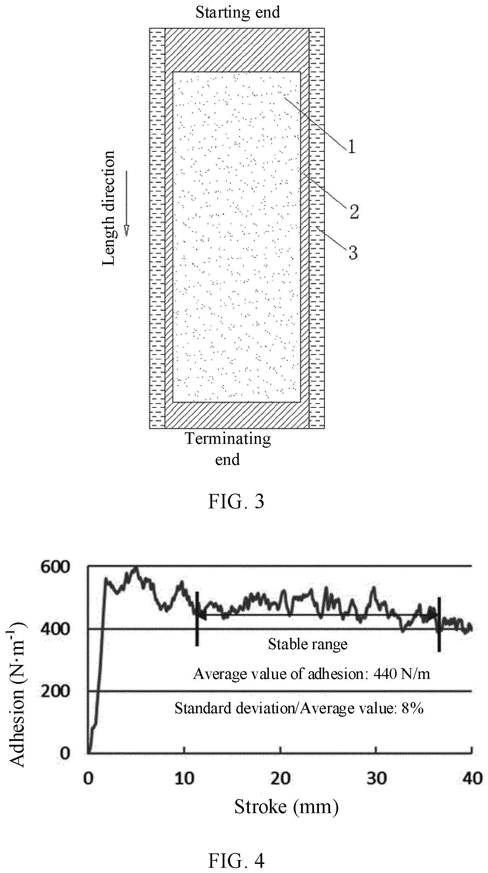

FIG. 3 is a schematic structural diagram (top view) of a positive electrode plate according to another embodiment of this application. Uncoated regions may also be provided on two sides in the length direction and at a starting end and a terminating end of the positive electrode plate. Therefore, as shown in FIG. 3, the two sides in the length direction and the starting end and the terminating end of the positive electrode may be all provided with insulation layers 2.

FIG. 4 shows a relationship between adhesion and a stroke in an adhesion test.

### Examples

The following describes some embodiments of this application more specifically by using examples and comparative examples. Various tests and evaluations were performed according to the following methods. In addition, unless otherwise specified, "part" and "%" are based on weight.

### Test method and device

### Weight-average molecular weight test for binder:

The gel permeation chromatography (GPC) method was used to test a weight-average molecular weight of a binder in an insulation layer. In this application, the weight-average molecular weight refers to an average molecular weight calculated based on mass.

### Adhesion test:

Adhesion between the insulation layer and the current collector was tested by using a Gotech tensile machine and a 90°-angle method: An electrode plate provided with an insulation layer in a finished lithium-ion battery was cut into a strip sample of 20 mm × 60 mm, and length and width of the sample could be adjusted proportionally according to actual situations. In a length direction of the sample, an insulation layer surface at one end of the sample was adhered to a steel plate by using a double-sided adhesive, where a length of the insulation layer surface adhered was not less than 40 mm. Subsequently, the steel plate was fixed to a corresponding position of the Gotech tensile machine, another end of the sample that was not adhered to the steel plate was lifted, and the electrode plate sample was clamped in a collet by using a connector or clamped directly in the collet, where a spatial included angle of the lifted sample and the steel plate was 90°. The electrode plate was pulled by the collet at a speed of 5 mm/min to make sure that the insulation layer was separated from the current collector, and a final average tensile force tested in a stable range was recorded as adhesion between the insulation layer and the current collector. As shown in FIG. 4, a ratio of a standard deviation to an average value of adhesion data of the stable range was required to be not higher than 10%.

### Cover rate test:

(1) An electrode plate coated with an insulating coating was cut to obtain an electrode plate sample coated with the insulation layer, where an area of a surface provided with the insulation layer was denoted as S1.
(2) A CCD microscope with a resolution of 0.02 µm was used to measure a current collector area (that is, an uncoated area) uncoated with the insulating material on a surface of the electrode plate sample coated with the insulation layer in (1), and the current collector area was denoted as S2.
(3) A cover rate B of the insulation layer was calculated according to the following formula: B = (S1-S2)/S1 × 100%.

### Dᵥ99 test for inorganic particles:

A laser particle size analyzer was used to test Dᵥ99 of the inorganic particles. Dᵥ99 indicates a particle size of the inorganic particles that reaches 99% of a cumulative volume from a small particle size side in volume-based particle size distribution.

### Insulation layer thickness test:

(1) In an environment at a temperature of (25±3)°C, an electrode plate coated with an insulating coating was detached from a finished battery core. An electrolyte remaining on a surface of the electrode plate was wiped away by using dust-free paper.
(2) The electrode plate coated with the insulation layer was cut by plasma to obtain a cross section of the electrode plate.
(3) The cross section of the electrode plate obtained in (2) was observed under a SEM; thickness of an insulating coating on a single surface was tested, with adjacent test points spaced 2 mm to 3 mm apart. At least 15 different points were tested; and an average value of thicknesses of all test points was recorded as the thickness of the insulating coating.

### Percentage test for aluminum in insulation layer:

(1) In an environment at a temperature of (25±3)°C, an electrode plate provided with an insulation layer was detached from a finished lithium-ion battery. An electrolyte remaining on a film layer was completely removed by using a DMC and was dried in a fume cupboard.
(2) On the electrode plate obtained in (1), the insulation layer was scraped by using a stainless steel blade to obtain insulation layer powder.
(3) An inductively coupled plasma spectrometer was used to test a percentage of element aluminum in the insulating coating sample obtained in (2).

### Nail penetration test pass rate:

A lithium-ion battery under test was charged to a voltage of 4.45 V at a constant current at a rate of 0.05C, and was then charged to a current of 0.025C (cutoff current) at a constant voltage of 4.45 V to make sure that the lithium-ion battery was fully charged, and an appearance of the lithium-ion battery before test was recorded. The battery was subjected to a nail penetration test in an environment at a temperature of (25±3)°C, where a steel nail had a diameter of 4 mm, a penetration speed was 30 mm/s, a penetration position was located on a side surface of the lithium-ion battery, and the test was stopped after the test was performed for 3.5 min or a surface temperature of an electrode assembly was reduced to 50°C. 10 lithium-ion batteries were taken as a group, a state of each lithium-ion battery was observed during the test, and the lithium-ion batteries were considered to have passed the nail penetration test if they have passed 15 of 20 nail penetration tests, based on a determining standard that the lithium-ion batteries have no combustion and no explosion.

### Example 1

### <Preparation of positive electrode plate>

### <Preparation of binder>

Distilled water was added into a reactor and stirred; after nitrogen was introduced to remove oxygen for 2 h, the following monomers of acrylonitrile, sodium acrylate, and acrylamide were added into the reactor at a mass ratio of 45:45: 10; a resulting mixture was heated to 65°C in an inert atmosphere and kept at a constant temperature; subsequently, a 20% ammonium persulfate solution was added as an initiator for initiating a reaction; a precipitate was taken out after the reaction was performed for 22 h; and an alkaline solution was added for neutralization until a pH was 6.5 to 9. A mass ratio of the distilled water, the monomers, and the initiator was 89.5:10:0.5. After the reaction, reaction products were filtered, washed, dried, crushed, sieved, and the like to obtain a binder.

### <Preparation of insulation layer slurry>

The binder prepared and inorganic particles boehmite were dispersed in deionized water and stirred to uniformity until the slurry had a stable viscosity to obtain an insulation layer slurry with a solid content of 30%, where a mass ratio of the binder and the inorganic particles was 50:50. The binder had a weight-average molecular weight of 500000, and Dᵥ99 of the inorganic particles was 3 µm.

### <Preparation of positive electrode plate including insulation layer>

As positive electrode active materials, lithium cobaltate (LCO), polyvinylidene fluoride (PVDF), conductive carbon black, and carbon nanotubes were mixed at a mass ratio of 97:1.5:0.8:0.7, subsequently N-methylpyrrolidone (NMP) was added as a solvent to prepare a slurry with a solid content of 75%, and the slurry was stirred to uniformity. The slurry was uniformly applied on an aluminum foil current collector and dried at 90°C to obtain an active material layer with a thickness of 100 µm.

The insulation layer slurry prepared was applied on a region uncoated with an active material layer on a surface of the aluminum foil to obtain an insulation layer with a thickness of 6 µm and a cover rate of 90%, where a mass percentage of the inorganic particles was 50% based on a total mass of the insulation layer, a mass percentage of the binder was 50% based on the total mass of the insulation layer, and a mass percentage of the element aluminum was 22.5% based on the total mass of the insulation layer. Subsequently, the foregoing steps were repeated on another surface of the positive electrode plate to obtain a positive electrode plate with both surfaces coated with positive electrode active material layers. The positive electrode plate was cut into a size of 74 mm × 867 mm, and then tabs were welded thereto for later use.

### <Preparation of negative electrode plate>

As negative electrode active materials, graphite, butadiene styrene rubber, and sodium carboxymethyl cellulose were mixed at a weight ratio of 97.5:1.3:1.2, deionized water was added as a solvent to prepare a slurry with a solid content of 70%, and the slurry was stirred to uniformity. The slurry was uniformly applied on a copper foil current collector, dried at 110°C, and cold-pressed to obtain a negative electrode plate with one surface coated with a negative electrode active material layer with a thickness of 150 µm.

After the foregoing steps were completed, these steps were also implemented on a back surface of the negative electrode plate by using the same method to obtain a negative electrode plate with both surfaces coated. After coating was completed, the negative electrode plate was cut into a sheet with a size of 76 mm × 851 mm, and then tabs were welded thereto for later use.

### <Preparation of electrolyte>

In a dry argon atmosphere, organic solvents ethylene carbonate, ethyl methyl carbonate, and diethyl carbonate were mixed at a mass ratio EC:EMC:DEC of 30:50:20 to obtain an organic solution, then a lithium salt lithium hexafluorophosphate was dissolved in the organic solvent, and a resulting solution was mixed to uniformity to obtain an electrolyte with a lithium salt concentration of 1.15 mol/L.

### <Preparation of separator>

Aluminum oxide and polyacrylate were mixed at a mass ratio of 90:10, and a resulting mixture was dissolved in deionized water to obtain a ceramic slurry with a solid content of 50%. Subsequently, the ceramic slurry was uniformly applied on one surface of a porous substrate (polyethylene, with a thickness of 7 µm, an average pore size of 0.073 µm, and a porosity of 26%) by using a micro-concave coating method, followed by drying to obtain a double-layer structure with a ceramic coating and the porous substrate, where the ceramic coating had a thickness of 50 µm.

Polyvinylidene fluoride (PVDF) and polyacrylate were mixed at a mass ratio of 96:4, and dissolved in deionized water to obtain a polymer slurry with a solid content of 50%. Subsequently, the polymer slurry was uniformly applied on two surfaces of the ceramic coating and porous substrate double-layer structure, followed by drying to obtain a separator, where each coating formed by the polymer slurry had a thickness of 2 µm.

### <Preparation of lithium-ion battery>

The positive electrode plate, separator, and negative electrode plate prepared were stacked in order to make sure that the separator was sandwiched between the positive electrode plate and the negative electrode plate to provide separation, and then the resulting stack was wound to obtain an electrode assembly. The electrode assembly was placed into an aluminum-plastic film packaging bag, and dehydrated at 80°C; the electrolyte prepared was injected; and then processes such as vacuum sealing, standing, formation, and shaping were performed to obtain a lithium-ion battery.

### Example 2

Example 2 was the same as example 1 except that a mass percentage of the inorganic particles was 75% based on a total mass of the insulation layer, and a mass percentage of the binder was 25% based on the total mass of the insulation layer, so that a mass percentage of the element aluminum was 33.8% based on the total mass of the insulation layer in the <preparation of insulation layer slurry>.

### Example 3

Example 3 was the same as example 1 except that a mass percentage of the inorganic particles was 85% based on a total mass of the insulation layer, and a mass percentage of the binder was 15% based on the total mass of the insulation layer, so that a mass percentage of the element aluminum was 38.3% based on the total mass of the insulation layer in the <preparation of insulation layer slurry>.

### Example 4

Example 4 was the same as example 1 except that a mass percentage of the inorganic particles was 98% based on a total mass of the insulation layer, and a mass percentage of the binder was 2% based on the total mass of the insulation layer, so that a mass percentage of the element aluminum was 44.1% based on the total mass of the insulation layer in the <preparation of insulation layer slurry>.

### Example 5

Example 5 was the same as example 1 except that aluminum oxide (Al₂O₃) was used as the inorganic particles, a mass percentage of the inorganic particles was 95% based on a total mass of the insulation layer, and a mass percentage of the binder was 5% based on the total mass of the insulation layer, so that a mass percentage of the element aluminum was 50.3% based on the total mass of the insulation layer in the <preparation of insulation layer slurry>.

### Example 6

Example 6 was the same as example 1 except that aluminum oxide (Al₂O₃) was used as the inorganic particles, a mass percentage of the inorganic particles was 98% based on a total mass of the insulation layer, and a mass percentage of the binder was 2% based on the total mass of the insulation layer, so that a mass percentage of the element aluminum was 52% based on the total mass of the insulation layer in the <preparation of insulation layer slurry>.

### Example 7

Example 7 was the same as example 3 except that sodium polyacrylate was used as the binder in the <preparation of insulation layer slurry>.

### Example 8

Example 8 was the same as example 3 except that polyacrylamide was used as the binder in the <preparation of insulation layer slurry>.

### Example 9

Example 9 was the same as example 3 except that acrylamide and sodium acrylate at a mass ratio of 40:60 were used as the monomers in the <preparation of binder>.

### Example 10

Example 10 was the same as example 3 except that acrylonitrile and acrylamide at a mass ratio of 40:60 were used as the monomers in the <preparation of binder>.

### Example 11

Example 11 was the same as example 3 except that acrylonitrile and sodium acrylate at a mass ratio of 40:60 were used as the monomers in the <preparation of binder>.

### Example 12

Example 12 was the same as example 3 except that acrylamide, sodium acrylate, acrylamide and acrylic ester at a mass ratio of 27:60:10:3 were used as the monomers in the <preparation of binder>.

### Example 13

Example 13 was the same as example 3 except that acrylonitrile, sodium acrylate and acrylamide at a mass ratio of 30:60: 10 were used as the monomers in the <preparation of binder>.

### Example 14

Example 14 was the same as example 3 except that acrylonitrile, sodium acrylate and acrylamide at a mass ratio of 30:10:60 were used as the monomers in the <preparation of binder>.

### Example 15

Example 15 was the same as example 3 except that acrylonitrile, sodium acrylate and acrylamide at a mass ratio of 50:10:40 were used as the monomers in the <preparation of binder>.

### Example 16

Example 16 was the same as example 3 except that acrylonitrile, sodium acrylate and acrylamide at a mass ratio of 55:35:10 were used as the monomers in the <preparation of binder>.

### Example 17

Example 17 was the same as example 3 except that acrylonitrile, sodium acrylate and acrylamide at a mass ratio of 70:20:10 were used as the monomers in the <preparation of binder>.

### Example 18

Example 18 was the same as example 3 except that diaspore was used as the inorganic particles in the <preparation of binder>.

### Example 19

Example 19 was the same as example 3 except that aluminum oxide was used as the inorganic particles so that a percentage of the element aluminum was 45% based on the total mass of the insulation layer in the <preparation of binder>.

### Example 20

Example 20 was the same as example 3 except that a mixture of boehmite and aluminum oxide (a mass ratio of the boehmite and the aluminum oxide was 7:3) was used as the inorganic particles so that a percentage of the element aluminum was 40% based on the total mass of the insulation layer in the <preparation of binder>.

### Example 21

Example 21 was the same as example 3 except that a mixture of boehmite, aluminum oxide and diaspore (a mass ratio of the boehmite, the aluminum oxide, and the diaspore was 6:3:1) was used as the inorganic particles so that a percentage of the element aluminum was 40% based on the total mass of the insulation layer in the <preparation of binder>.

### Example 22

Example 22 was the same as example 3 except that the binder had a weight-average molecular weight of 100000 in the <preparation of binder>.

### Example 23

Example 23 was the same as example 3 except that the binder had a weight-average molecular weight of 1000000 in the <preparation of binder>.

### Example 24

Example 24 was the same as example 3 except that the binder had a weight-average molecular weight of 2000000 in the <preparation of binder>.

### Example 25

Example 25 was the same as example 1 except that acrylamide and sodium acrylate at a mass ratio of 40:60 were used as the monomers in the <preparation of insulation layer slurry>.

### Example 26

Example 26 was the same as example 2 except that acrylamide and sodium acrylate at a mass ratio of 40:60 were used as the monomers in the <preparation of insulation layer slurry>.

### Example 27

Example 27 was the same as example 4 except that acrylamide and sodium acrylate at a mass ratio of 40:60 were used as the monomers in the <preparation of insulation layer slurry>.

### Example 28

Example 28 was the same as example 22 except that acrylamide and sodium acrylate at a mass ratio of 40:60 were used as the monomers in the <preparation of insulation layer slurry>.

### Example 29

Example 29 was the same as example 3 except that Dᵥ99 of the inorganic particles was 0.01 µm in the <preparation of insulation layer slurry>, and the insulation layer had a thickness of 0.02 µm in the <preparation of positive electrode plate including insulation layer>.

### Example 30

Example 30 was the same as example 3 except that Dᵥ99 of the inorganic particles was 1.0 µm in the <preparation of insulation layer slurry>, and that the insulation layer had a thickness of 2.0 µm in the <preparation of positive electrode plate including insulation layer>.

### Example 31

Example 31 was the same as example 3 except that Dᵥ99 of the inorganic particles was 3.0 µm in the <preparation of insulation layer slurry>, and that the insulation layer had a thickness of 4.0 µm in the <preparation of positive electrode plate including insulation layer>.

### Example 32

Example 32 was the same as example 3 except that Dᵥ99 of the inorganic particles was 5.0 µm in the <preparation of insulation layer slurry>, and that the insulation layer had a thickness of 6.0 µm in the <preparation of positive electrode plate including insulation layer>.

### Example 33

Example 33 was the same as example 3 except that Dᵥ99 of the inorganic particles was 8.0 µm in the <preparation of insulation layer slurry>, and that the insulation layer had a thickness of 9.0 µm in the <preparation of positive electrode plate including insulation layer>.

### Example 34

Example 34 was the same as example 3 except that Dᵥ99 of the inorganic particles was 9.9 µm in the <preparation of insulation layer slurry>, and that the insulation layer had a thickness of 10.0 µm in the <preparation of positive electrode plate including insulation layer>.

### Comparative example 1

Comparative example 1 was the same as example 3 except that a mass percentage of the inorganic particles was 33% based on a total mass of the insulation layer, and a mass percentage of the binder was 67% based on the total mass of the insulation layer, so that a mass percentage of the element aluminum was 14.9% based on the total mass of the insulation layer in the <preparation of insulation layer slurry>.

### Comparative example 2

Comparative example 2 was the same as example 3 except that a mass percentage of the inorganic particles was 99% based on a total mass of the insulation layer, and a mass percentage of the binder was 1% based on the total mass of the insulation layer, so that a mass percentage of the element aluminum was 52.4% based on the total mass of the insulation layer in the <preparation of insulation layer slurry>.

### Comparative example 3

Comparative example 3 was the same as example 3 except that the binder had a weight-average molecular weight of 50000 in the <preparation of binder>.

### Comparative example 4

Comparative example 4 was the same as example 3 except that the binder had a weight-average molecular weight of 3000000 in the <preparation of binder>.

### Comparative example 5

Comparative example 5 was the same as example 3 except that acrylonitrile, sodium acrylate and acrylamide at a mass ratio of 10:75:15 were used as the monomers in the <preparation of binder>.

### Comparative example 6

Comparative example 6 was the same as example 3 except that acrylonitrile, sodium acrylate and acrylamide at a mass ratio of 80:5:15 were used as the monomers in the <preparation of binder>.

### Comparative example 7

Comparative example 7 was the same as example 3 except that polyvinylidene fluoride (PVDF) was used as the binder, and the binder had a weight-average molecular weight of 700000 in the <preparation of binder>.

### Comparative example 8

Comparative example 8 was the same as example 3 except that Dᵥ99 of the inorganic particles boehmite was 11 µm, and the insulation layer had a thickness of 12 µm in the <preparation of positive electrode plate>.

### Comparative example 9

Comparative example 9 was the same as example 3 except that Dᵥ99 of the inorganic particles boehmite was 0.007 µm, and the insulation layer had a thickness of 0.009 µm in the <preparation of positive electrode plate>.

Preparation parameters and test results of the examples and comparative examples are shown in the following Table 1 and Table 2.

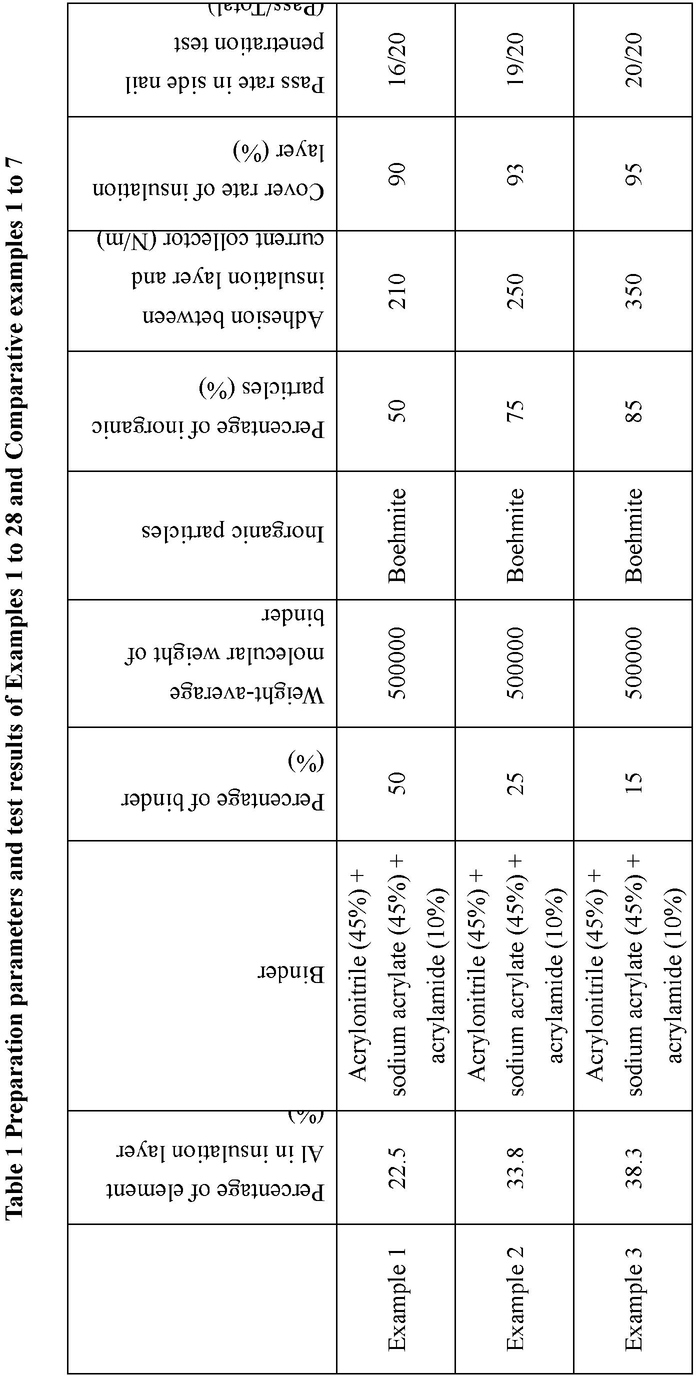

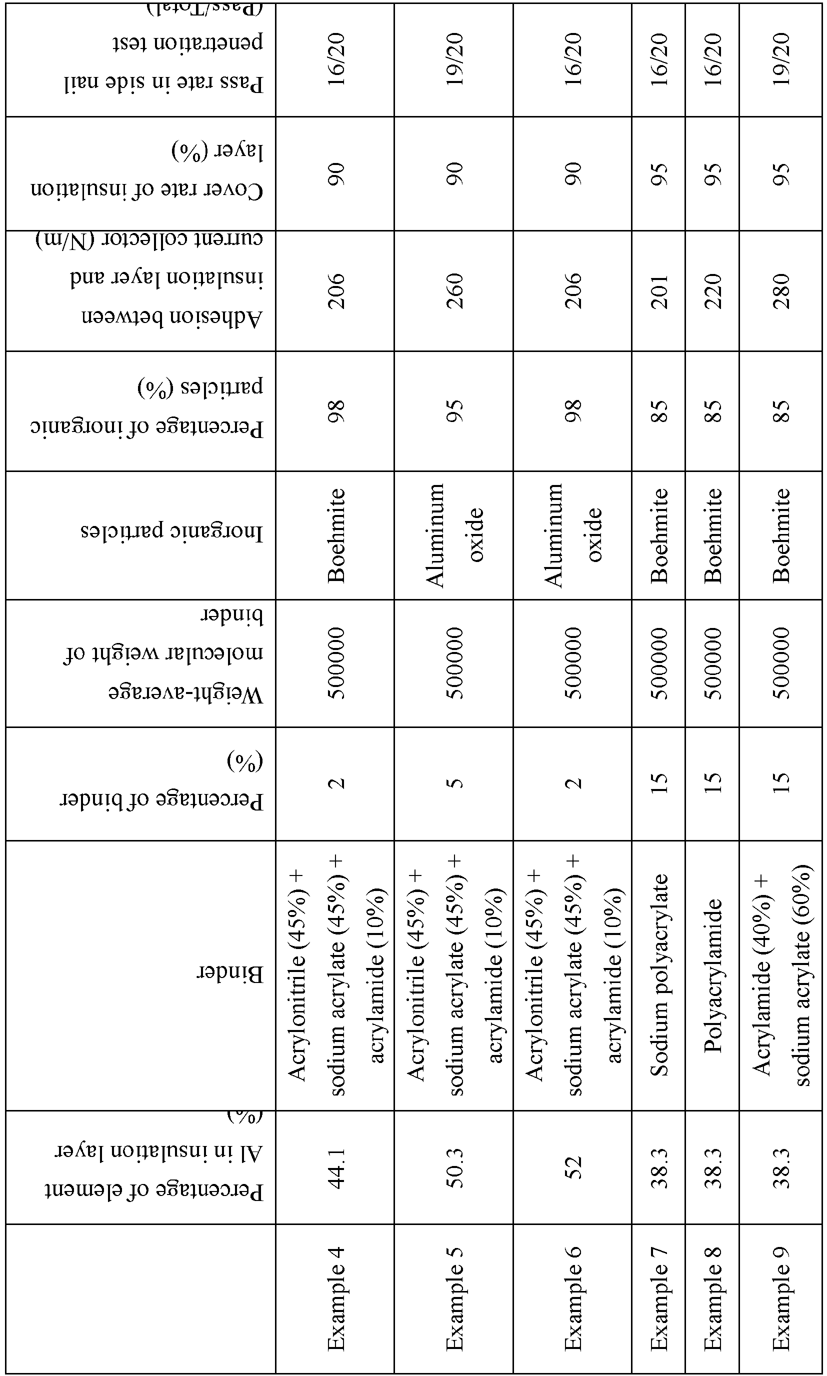

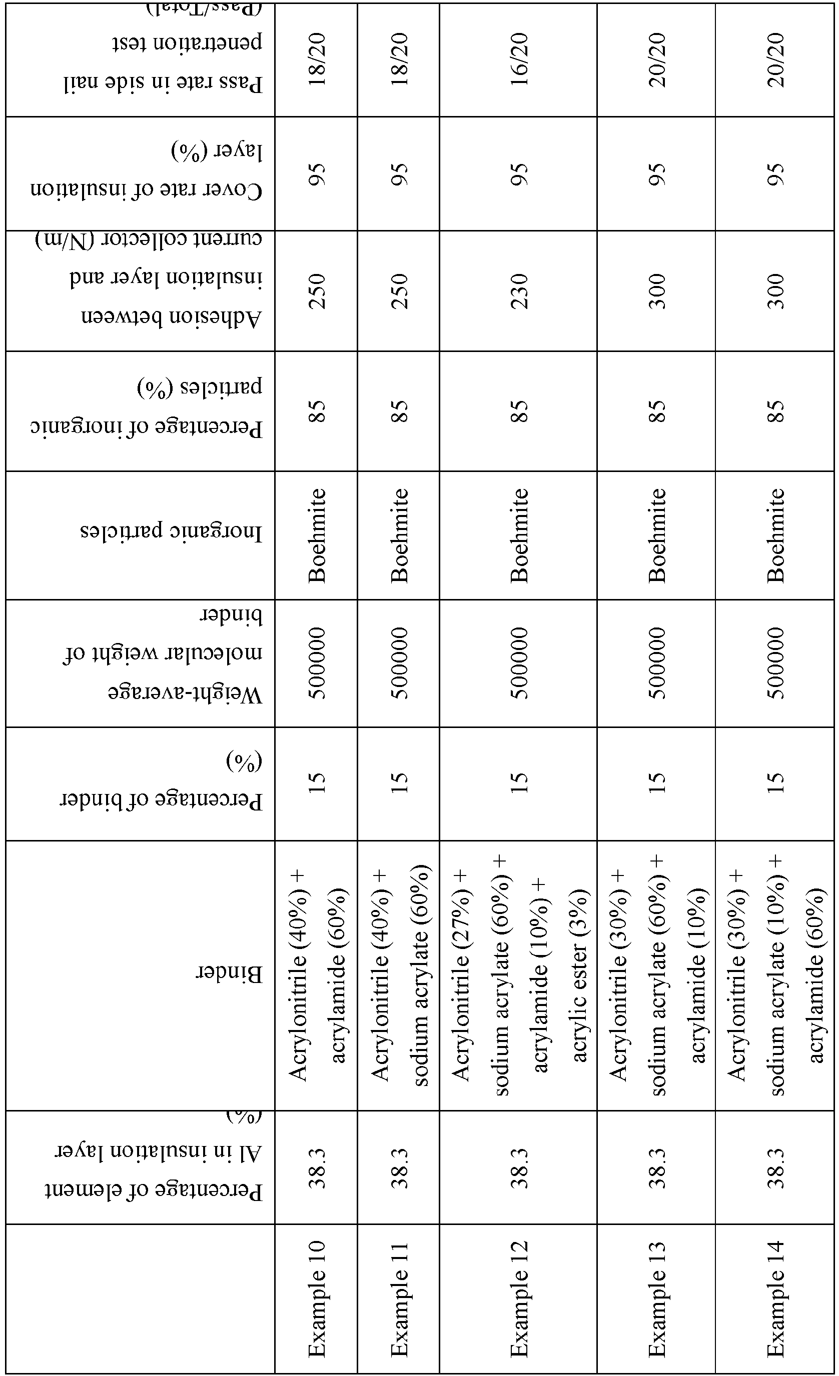

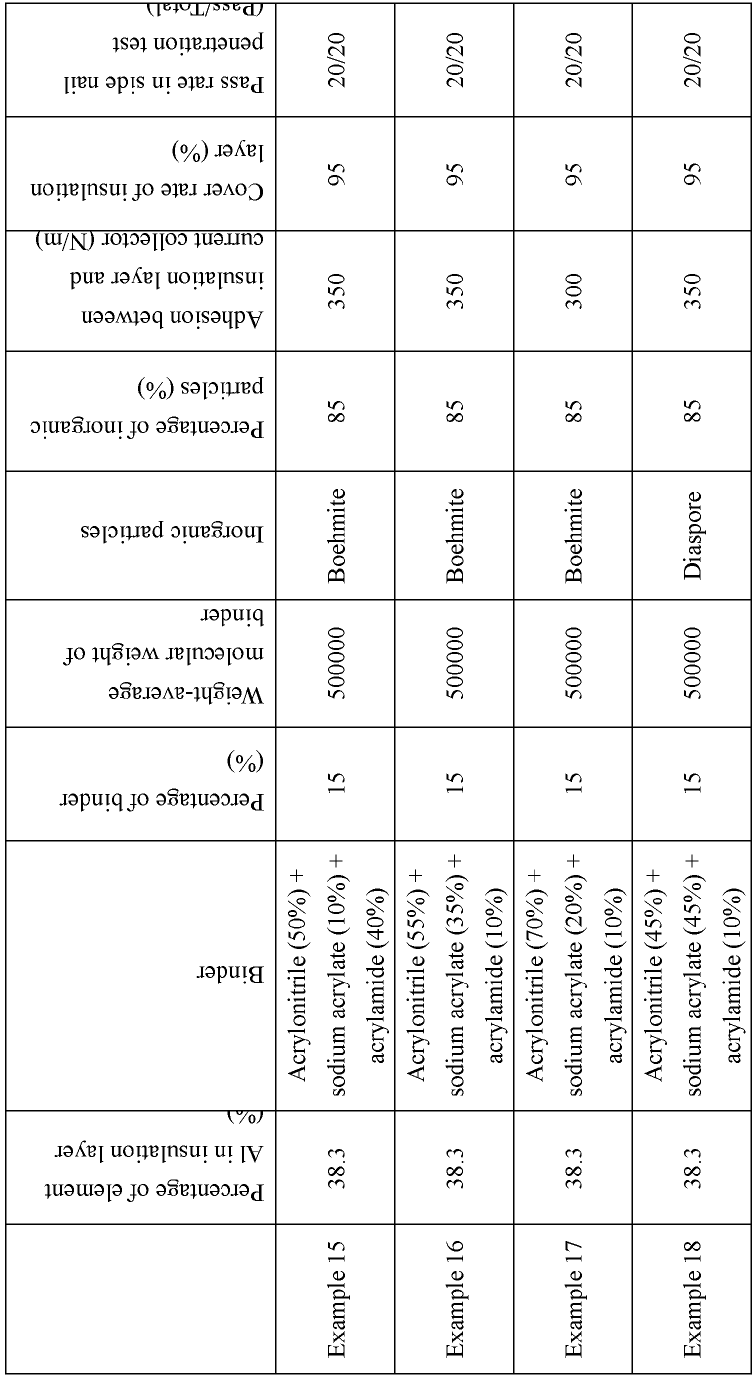

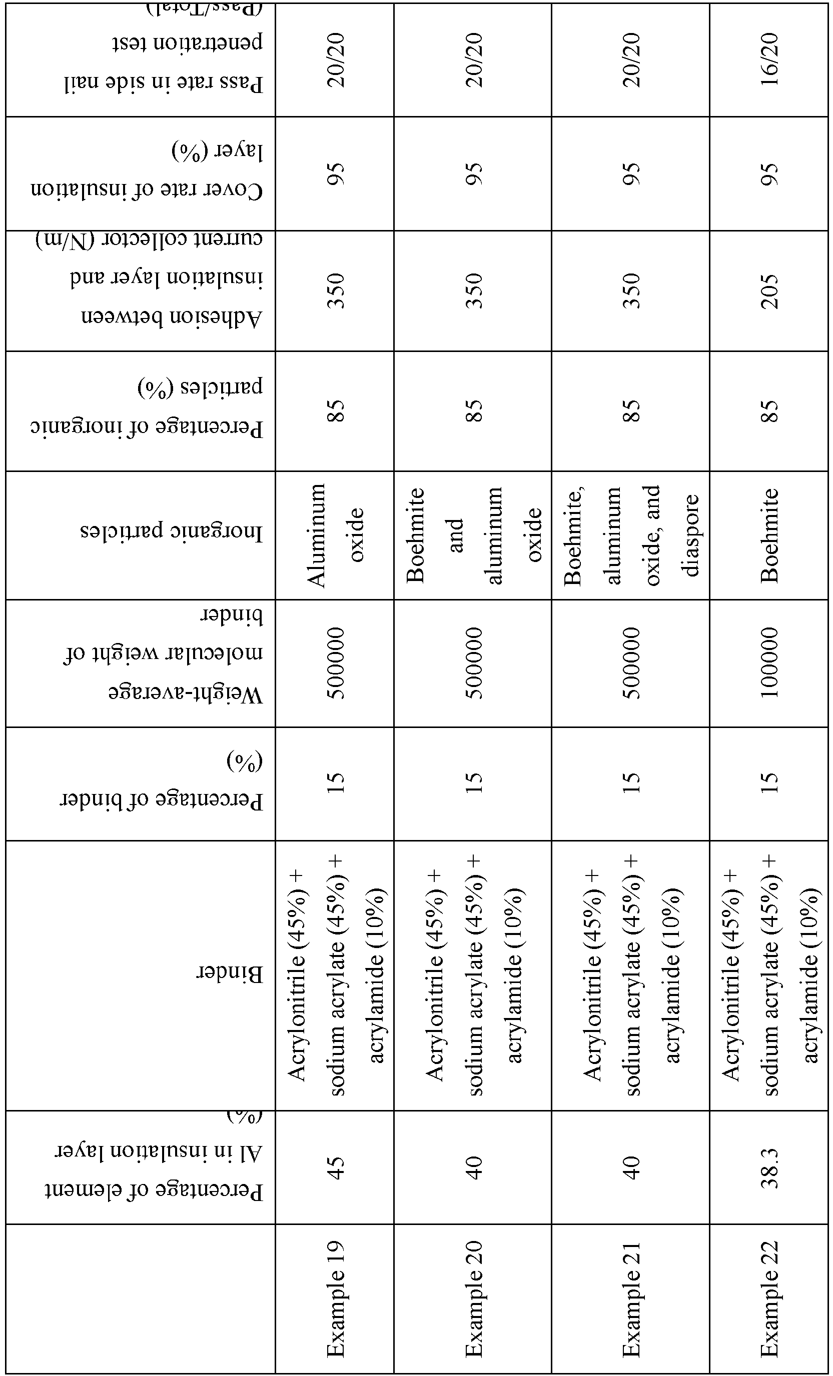

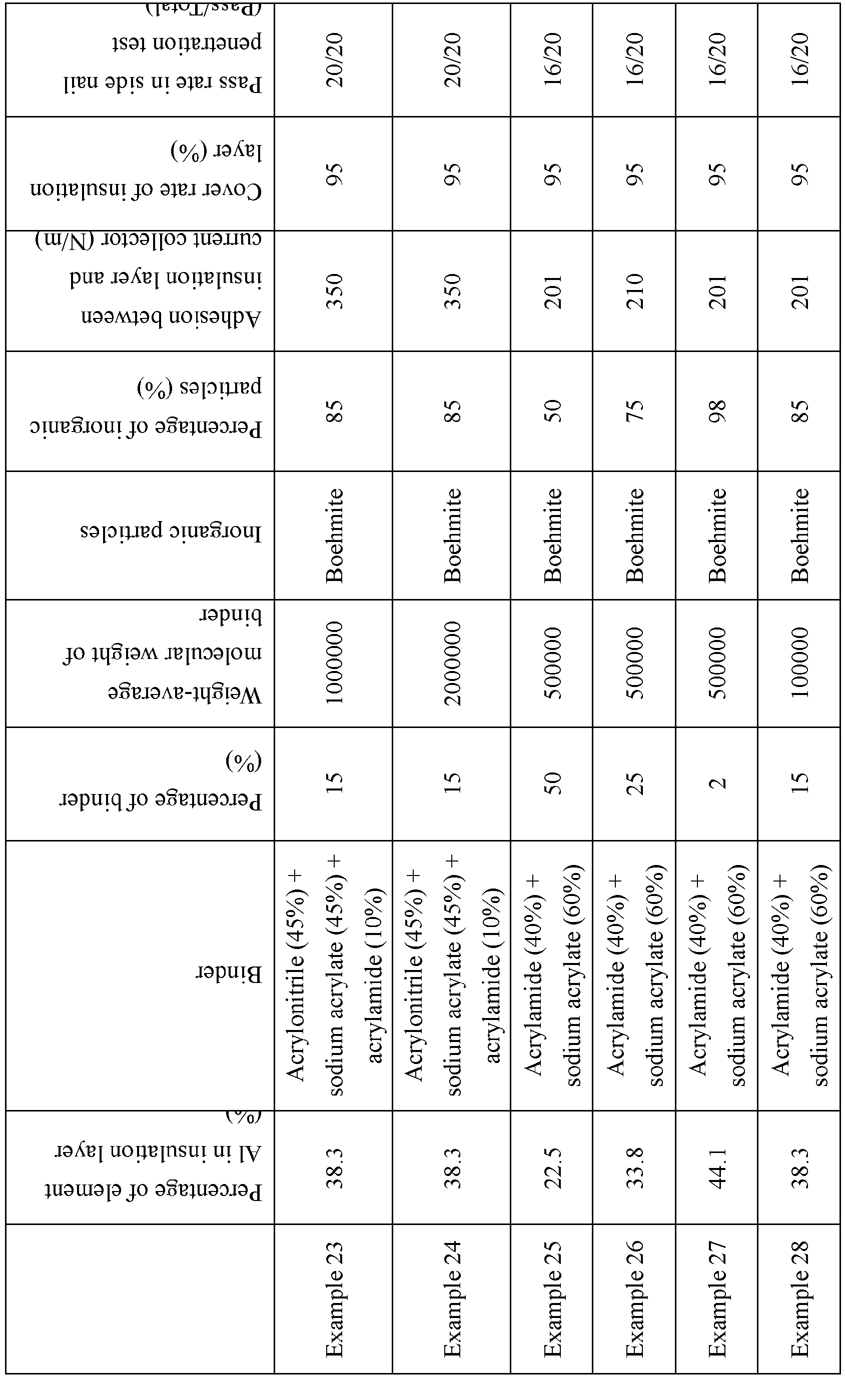

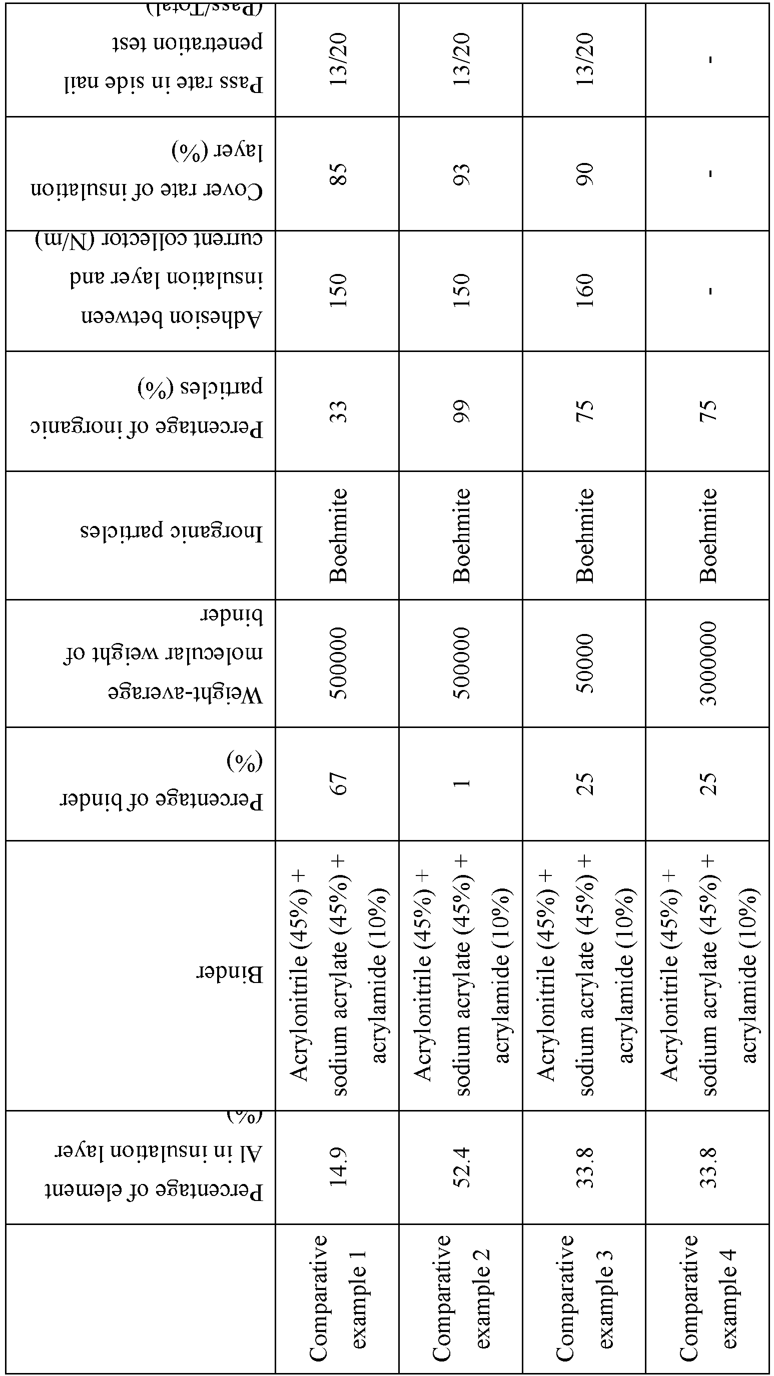

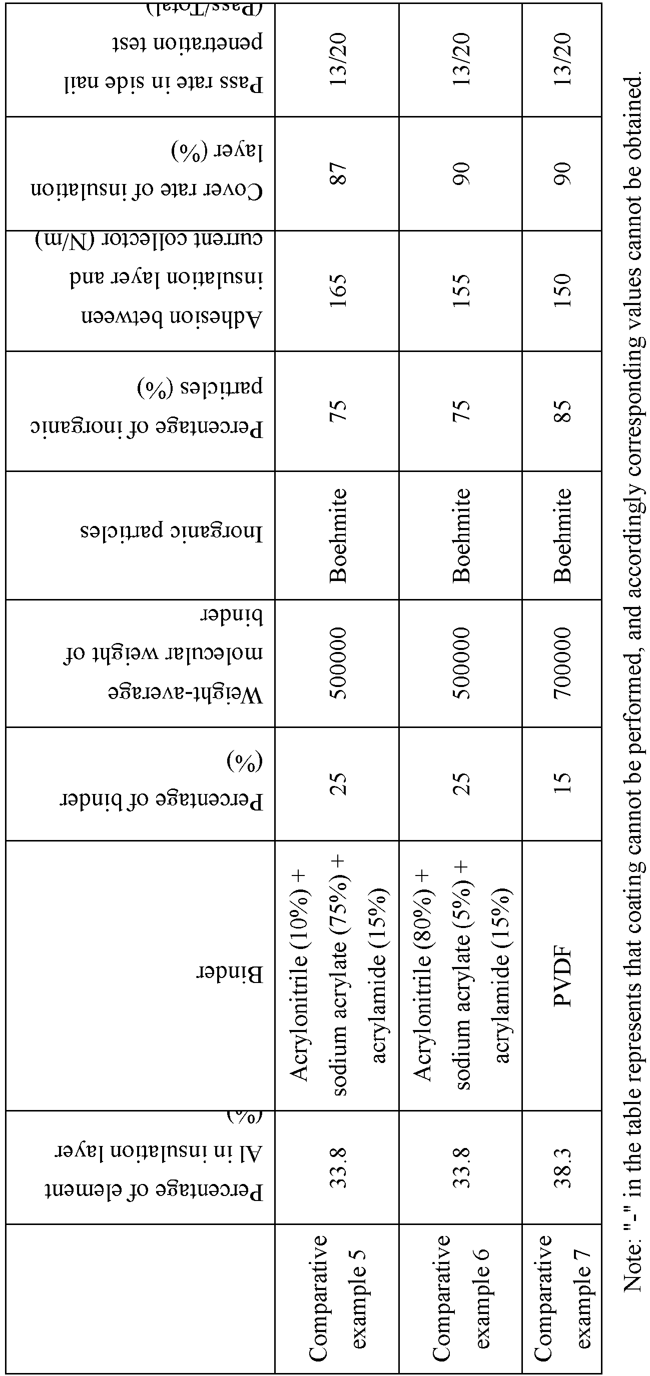

**Table 2 Preparation parameters and test results of Examples 29 to 34 and Comparative examples 8 and 9**

| | Dᵥ99 of inorganic particles (µm) | Thickness of insulation layer (µm) | Adhesion between insulation layer and current collector (N/m) | Cover rate of insulation layer (%) |
|---|---|---|---|---|
| Example 29 | 0.01 | 0.02 | 350 | 90 |
| Example 30 | 1.0 | 2.0 | 350 | 90 |
| Example 31 | 3.0 | 4.0 | 350 | 90 |
| Example 32 | 5.0 | 6.0 | 350 | 90 |
| Example 33 | 8.0 | 9.0 | 350 | 90 |
| Example 34 | 9.9 | 10.0 | 350 | 90 |
| Comparative example 8 | 11 | 12 | 350 | 90 |
| Comparative example 9 | 0.007 | 0.009 | 180 | 90 |

It can be learned from examples 1 to 34 and comparative examples 1 to 7 that in the lithium-ion battery including the insulation layer of this application, the adhesion between the insulation layer and the current collector was obviously improved.

It can also be learned from examples 1 to 34 and comparative examples 1 to 7 that in the lithium-ion battery including the insulation layer of this application, the cover rate of the insulation layer was increased.

It can further be learned from examples 1 to 34 and comparative examples 1 to 7 that the nail penetration test pass rate of the lithium-ion battery including the insulation layer of this application was obviously increased.

It can be learned from examples 1, 2, 4 and 22 and comparative examples 25 to 28 that the binder formed by polymerization of the three monomers of acrylonitrile, sodium acrylate and acrylamide had better adhesion performance than the binder formed by polymerization of two of the monomers of acrylonitrile, sodium acrylate and acrylamide in a case that the two binders had the same binder percentage, same binder weight-average molecular weight, same inorganic particles, and same inorganic particle percentage.

Dᵥ99 of the inorganic particles and the insulation layer affect the adhesion between the insulation layer and the current collector. It can be learned from examples 28 to 34 and comparative examples 8 to 9 that the adhesion between the insulation layer and the current collector could be enhanced provided that Dᵥ99 of the inorganic particles and thickness of the insulation layer were within a range defined in this application.

The percentage of the element Al in the insulation layer affects the adhesion between the insulation layer and the current collector. It can be learned from examples 1 to 28 and comparative Examples 1 and 2 that the adhesion between the insulation layer and the current collector could be enhanced provided that the percentage of the element Al in the insulation layer was within a range defined in this application.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. An electrochemical apparatus, comprising: a positive electrode, wherein the positive electrode comprises a current collector; the current collector comprises a coated region provided with an active material, and an uncoated region provided with no active material; the uncoated region is at least partially provided with an insulation layer; the insulation layer comprises a binder and inorganic particles; based on a total mass of the insulation layer, a mass percentage of element aluminum in the insulation layer is 20% to 52%; and an adhesion between the insulation layer and the current collector is not less than 201 N/m.

2. The electrochemical apparatus according to claim 1, wherein the binder comprises a polymer formed by polymerization of at least one of a monomer of acrylonitrile, acrylate, acrylamide, or acrylic ester.

3. The electrochemical apparatus according to claim 2, wherein based on a total mass of the polymer, a mass percentage of the acrylonitrile is 25% to 70%, a mass percentage of the acrylate is 10% to 60%, a mass percentage of the acrylamide is 10% to 60%, and a mass percentage of the acrylic ester is 0% to 10%.

4. The electrochemical apparatus according to claim 1, wherein the binder has a weight-average molecular weight of 100000 to 2000000.

5. The electrochemical apparatus according to claim 1, wherein based on the total mass of the insulation layer, a mass percentage of the binder is 2% to 50%, and a mass percentage of the inorganic particles is 50% to 98%.

6. The electrochemical apparatus according to claim 1, wherein a cover rate of the insulation layer is not less than 90%.

7. The electrochemical apparatus according to claim 1, wherein the insulation layer has a thickness of 0.02 µm to 10 µm.

8. The electrochemical apparatus according to claim 1, wherein the adhesion between the insulation layer and the current collector is not less than 300 N/m.

9. The electrochemical apparatus according to claim 1, wherein Dᵥ99 of the inorganic particles is 0.01 µm to 9.9 µm.

10. The electrochemical apparatus according to claim 1, wherein the inorganic particles comprise at least one of boehmite, diaspore, or aluminum oxide.

11. An electronic apparatus, comprising the electrochemical apparatus according to any one of claims 1 to 10.
